# EUROPEAN PATENT SPECIFICATION

(11) **EP 1 105 004 B1**
(45) Date of publication and mention of the grant of the patent: **19.03.2003**
(21) Application number: 99967812.1
(22) Date of filing: 17.08.1999
(51) Int. Cl.: A23L 1/211

(54) **PROCESS FOR CONVERTING PHYTATE INTO INORGANIC PHOSPHATE**
VERFAHREN ZUR UEBERFUEHRUNG VON PHYTAT IN ANORGANISCHES PHOSPHAT
PROCEDE DE TRANSFORMATION DE PHYTATE EN PHOSPHATE INORGANIQUE

(30) Priority: 19.08.1998 GB 9818126
(43) Date of publication of application: 13.06.2001
(73) Proprietor: University of Saskatchewan, Saskatoon, Saskatchewan S7N 5B5 (CA)
(72) Inventor: MAENZ, David Daniel, Dept. Animal/Poultry Science, Saskatoon, Saskatchewan S7N 5B5 (CA); CLASSEN, Henry Leonard, Dept. Animal/Poultry Sc., Saskatoon, Saskatchewan S7N 5B5 (CA); NEWKIRK, Rex Wayne, Dept. Animal/Poultry Science, Saskatoon, Saskatchewan S7N 5B5 (CA)
(74) Representative: HOFFMANN - EITLE
(86) International application number: IB9901679
(87) International publication number: WO00010404

(56) References cited:
- EP-A- 0 380 343
- EP-A- 0 619 369
- WO-A-95/28850
- US-A- 3 736 147
- SUTARDI ET AL: "The characteristics of soybean phytase" JOURNAL OF FOOD CHEMISTRY, vol. 10, no. 3, XP002062438
- DATABASE WPI Derwent Publications Ltd., London, GB; AN 1989-153822 XP002129938 " " & JP 01 093408 A (DAIICHI KIGENSO), 12 April 1989 (1989-04-12) & PATENT ABSTRACTS OF JAPAN vol. 0133, no. 02, 12 July 1989 (1989-07-12) & JP 01 093408 A (DAIICHI KIGENSO), 12 April 1989 (1989-04-12)

## Description

The present invention is concerned with a process for converting phytate into inorganic phosphate. In particular, it concerns such a process which can be adjuncted to conventional processes which are used to extract oil from oilseeds.

Phytate [myoinositol 1,2,3,4,5,6-hexakis (dihydrogen phosphate)] is found to varying degrees in all plants as the major storage form of phosphorus. Between 60-80% of the total phosphorus in plants is in the form of phytate. Phytate in plants is often found in the form of complexes with cations such as calcium, magnesium or potassium. The resulting complexes are sometimes called phytin. The term phytate as used herein specifically encompasses such phytin complexes.

Phytate is poorly digested by monogastric animals. As a result of this, monogastric animals fed a phytate-rich diet may still suffer from illnesses caused by phosphorus deficiency. This is because the phytate phosphorus is not bio-available, and the majority of dietary phytate consumed by a monogastric animal passes through its gastrointestinal tract and is excreted in the faeces. This excretion is a particular concern in areas of intensive livestock production where excessive amounts of phosphorus-enriched manure can be environmentally damaging.

A further problem associated with the presence of phytate in foods is that it forms complexes with multivalent metal cations. This can interfere with the bio-availability of such cations to animals and humans. This can lead to metal deficiency disorders or inadequate bone mineralization, especially in the case of vegetarians, elderly people and infants.

Phytate also has the disadvantage of inhibiting various enzymes in the gastrointestinal tract, including pepsin and trypsin. It is also forms complexes with proteins preventing their digestion. For these reasons, the presence of phytate in a diet is actually anti-nutritional as it reduces the digestibility of co-present proteins.

One solution which has been proposed to solve the above problems is to convert phytate into inorganic phosphate. The phosphorus in inorganic phosphate is bio-available to monogastric animals. This decreases the phosphorus content of faeces, liberates cations previously complexed by the phytate, promotes protein digestion and prevents phytate inhibition of gastrointestinal enzymes. The conversion is known to be effected by treating the phytate either *in vitro* or *in vivo* with a phosphatase enzyme called phytase. The reaction products of this conversion are myoinositol and orthophosphate, the latter being termed inorganic phosphate in this specification.

The *in vivo* conversion is carried out by adding phytase to foods which contain phytate. As a result, both the phytate and phytase are co-present in the gastrointestinal tract where, in theory at least, the phytase can convert the phytate into inorganic phosphate. However, this has proven to be only partially effective resulting at best in the conversion of no more than 55% of the phytate-phosphorus into inorganic phosphate, and usually a significantly smaller proportion. This incomplete conversion is primarily a consequence of the conditions within the gastrointestinal tract being quite different from those which are optimal for phytase activity. The temperature, pH, moisture and mineral content of the digesta are such that phytase is only partially effective in the gastrointestinal tract during the time which it takes for the digesta to pass through it.

The second solution of subjecting phytate-containing foods to *in vitro* hydrolysis with phytase has been found to be more effective than the *in vivo* conversion described above. This is because the conditions of the *in vitro* reaction can be tailored to those which result in the phytase having its optimum activity. EP-A-0 380 343 describes one example of such a process in which phytate present in soy protein isolates is converted into inorganic phosphate. The conversion is carried out in an aqueous solution using a bacterial phytase at a pH of 2-6 and at a temperature of 20-60°C.

However, it is found that even such treatments are still unsatisfactory. Firstly, the slurry resulting from these treatments has to be dried by driving away the significant amounts of water which are conventionally included. Although such drying is a relatively simple process step, it is nevertheless relatively expensive to carry out due to the bulk of water which has conventionally been used. Such a bulk is necessary firstly to provide the aqueous environment required by the phytase in order for it to be catalytically active, and secondly to facilitate mixing of the slurry which otherwise would form a relatively viscous mass. As a result of this drying problem, such *in vitro* processes have had limited commercial success. The second problem which has been found is that the conversion of phytate into inorganic phosphate in these *in vitro* processes is still far from complete unless extremely high concentrations of (relatively expensive) phytase are used. The present inventors have found that this is due to phytate existing in two forms; a phytase-susceptible form and a mineral-bound, phytase-resistant form. The phytase-resistant form has been found to be phytate in the form of a complex with alkaline earth metal cations such as Mg²⁺ and Ca²⁺.

Accordingly, a first object of the present invention is to provide a commercially viable process for the *in vitro* conversion of phytate in a food into inorganic phosphate. A second object is to provide such a commercially viable process in which about 50 mol% or more of the phytate is converted into inorganic phosphate. A third object is to adjunct such a process to a conventional process for extracting oil from oilseeds in order to provide, as a by-product, meal enriched with inorganic phosphate suitable for inclusion in an animal feed or for food use generally.

According to a first aspect, the present invention provides a process for converting phytate in a food into inorganic phosphate comprising the steps of (i) mechanically mixing a slurry comprising (a) 100 parts by weight of the phytate-containing food, (b) 60-1000 parts by weight of a solvent mixture which comprises water and a water-immiscible organic solvent having a boiling point of 20-100°C, the water-immiscible organic solvent constituting 20-85% by wt. of the solvent mixture, and (c) a phytase; and (ii) drying the food to remove the organic solvent.

Preferably in the above process, the slurry comprises 150-750 parts by weight of the solvent mixture, more preferably 250-600 parts by weight and most preferably 325-475 parts by weight.

The above process is capable of converting phytate present in a food into inorganic phosphate at reduced cost compared to previously available *in vitro* processes and with a high yield. The phytase requires the co-presence of a significant content of solvent in order to effectively catalyse the conversion of phytate into inorganic phosphate. Whilst it has always been assumed in the prior art that this solvent should be exclusively water, the present inventors have surprisingly found that a substantial proportion of this water can be replaced by an immiscible organic solvent without significantly affecting the ability of the phytase to catalyze the conversion of phytate into inorganic phosphate. The use of a solvent system which includes 20-85% by wt., more preferably 40-75% by wt., and most preferably 50-70% by wt. of the water-immiscible organic solvent is able to support phytase activity whilst having the advantage that drying of the slurry subsequently to the phytase-catalyzed conversion to an acceptable moisture content of less than 20 wt.% is substantially cheaper than drying a comparable slurry in which the solvent is formed entirely from water. This is because the solvent mixture used in the present invention requires the input of less energy to evaporate it from the slurry.

The slurry which is mechanically mixed preferably further comprises a chelating agent for alkaline earth metal cations. Such a chelating agent competes with the phytate for binding inorganic cations, in particular alkaline earth metal cations such as Ca²⁺ and Mg²⁺. This binding of inorganic cations by the chelating agent has the result of converting phytase-resistant phytate into phytase-susceptible phytate which in turn is then capable of being converted into inorganic phosphate by the co-present phytase.

The food which may be processed according to the present invention may be any phytate-containing food. Such foods are those typically derived from plants. According to a particularly preferred aspect of the invention, the food is one which is obtained by mixing crushed oilseeds with an organic solvent to extract the oil from the oilseeds, and then separating the crushed oilseeds adulterated with the solvent from the oil-containing solvent. These are typical steps used to extract oil from, for instance, soybeans, sunflower seeds, rapeseeds, canola seeds, rice, rice bran, maize, cottonseeds, peanuts, safflower seeds, coconuts, palmnuts, walnuts or hazelnuts, or any processed derivative thereof such as defatted soybeans. Other sources of phytate which can be processed include cereal grains such as wheat, barley, triticale, rye, sorghum or oats.

When extracting oil from the above listed seeds, 10-80% by weight (more preferably 35-60% by weight) of crushed oilseeds are mixed with 90-20% by weight (more preferably 65-40% by weight) of the organic solvent, this being typically n-hexane although any other water-immiscible organic solvent can be used which has a boiling point of 20-100°C. After vigorous mixing, oil from the crushed oilseeds migrates into the hexane following which the oil-enriched hexane is separated from the crushed oilseeds on which a residue of the hexane solvent remains. The solvent-adulterated crushed oilseeds typically comprise 15-65% by weight of the solvent and 85-35% by weight of the crushed oilseeds, more preferably 25-50% by weight of the solvent and 75-50% by weight of the crushed oilseeds and most preferably 35-45% by weight of the solvent and 65-55% by weight of the crushed oilseeds. The solvent-adulterated crushed oilseeds are sometimes referred to as marc or white flake in this technical art.

In a typical prior art process for extracting oil from oilseeds, the solvent-adulterated crushed oilseeds would be dried at this stage to remove all traces of the organic solvent. This is not the case in the present invention in which these solvent-adulterated crushed oilseeds are then treated to convert the phytate present into inorganic phosphate. In particular, 100 parts by weight (excluding solvent) of the crushed oilseeds adulterated with the organic solvent are mixed to form a slurry with 10-10,000 Units of phytase per kg of crushed oilseeds, 30-350 parts by weight (more preferably 100-250 parts by weight, most preferably 120-180 parts by weight) of water, and optionally additional water-immiscible organic solvent having a boiling point of 20-100°C, which may be the same or different from the organic solvent used in the oil extraction step, so that the total amount of organic solvent is 30-850 parts by weight (more preferably 125-500 parts by weight, most preferably 200-300 parts by weight). This slurry is subjected to mechanical mixing, for instance using a hobbart mixer, during which the phytase converts phytate present in the crushed oilseeds into inorganic phosphate.

The above slurry may further include 0.05-10 parts by weight of the chelating agent. As previously mentioned, this agent competes with the phytate for binding inorganic cations so converting phytase-resistant phytate into phytase-susceptible phytate. The chelating agent is any material which can chelate alkaline earth metal cations. Typical of such chelating agents are bi-, tri-, or tetra-carboxylic acids such as ascorbic acid, phthalic acid, citric acid or EDTA.

More preferably in this step, 100 parts by weight (excluding solvent) of the oilseeds are mixed with 0.5-5 parts by weight of the chelating agent, and 100-1,000 Units of phytase per kg of crushed oilseeds.

The slurry is preferably reacted in the mixer where the phytate is converted into inorganic phosphate by the catalytic action of the phytase for 5 minutes-2 hours, more preferably 15-90 minutes and most preferably 30-75 minutes and at a temperature of preferably 10-70°C, more preferably 20-65°C, and most preferably 40-60°C. The pH of the slurry is preferably 2-8, more preferably 3-6 and most preferably 4.5-5.5. The acidity of the slurry may be due to the presence of the acid chelating agent, although a mineral acid such as HCl or H₃PO₄ may alternatively or additionally be included to adjust the slurry's pH to that which is optimum for phytase activity.

Any water-immiscible organic solvent can be used provided that it has a boiling point of 20-100°C. Higher boiling point solvents are not preferred as they are not easy to evaporate or boil off from the slurry. Naturally, the chosen organic solvent has to have its boiling point above the temperature at which the phytate conversion to inorganic phosphate is carried out. Typical organic solvents having the desired boiling point are aliphatic solvents having at least 5 carbon atoms and preferred solvents are pentane, hexane and heptane, structural isomers thereof, and isooctane.

In a preferred aspect of the invention the slurry further comprises one or more of cereal grains, cereal flour, fat, vitamins, amino acids or one or more enzymes. Cereal grains and cereal flour contain phytate and this will also advantageously be converted into inorganic phosphate during the treatment with phytase. The presence of one or more enzymes such as a protease, a carboxypeptidase, a cellulase, a xylanase, a mannanase, an amylase, an α-galactosidase, a pectinase, a β-glucanase or an esterase, is also preferable. This is because such enzymes may help to liberate the phytate from plant bodies rendering it more susceptible to the action of the phytase and/or act upon other of the food components in order to improve their digestibility.

In a subsequent step, the food is dried in order to remove at least the organic solvent and preferably at least a part of the aqueous solvent. This can be done by desolventizing the food by for instance heating or spray drying. The resulting dried product preferably has a content of the organic solvent of less than 0.1 wt.%, more preferably less than 0.04 wt.%, and a moisture content of less than 20 wt.%, more preferably less than 15 wt.%.

The resulting inorganic phosphate-enriched food may then be processed into an animal feed or a human food by mixing it with one or more additional alimentary materials as required.

The resulting inorganic phosphate-enriched food is of substantially greater value to humans and all species of production animals compared to the starting food. In particular, the resulting phosphate-enriched feed may be incorporated in the diets of production animals such as chickens, turkeys, pigs, cattle, fish and sheep. Because the resulting feeds have a relatively low or negligible phytate-content, they also have the advantage of improving mineral and protein bio-availability in foods or feeds in which they are incorporated. In particular, cations which become complexed to the chelating agent will be bio-available as the resulting salts are water-soluble. Also bio-availability of proteins in the food is improved as the phytate is no longer available to entrap them in protein-phytate complexes.

The phytase which may be used in the present invention is produced by various microorganisms such as *Aspergillus spp., Rhizopus spp.,* and certain *yeasts.* Phytase is also produced by various plant seeds, for example wheat, during germination. Preferred phytases include Natuphos® obtainable from BASF Germany, Phytase Novo obtainable from Novo Nordisk and Finase®S obtainable from Alko Ltd.

The amount of phytase required will depend upon the preparation used, the phytate content of the food, and the reaction conditions. The appropriate dosage can easily be estimated by a person skilled in the art. Phytase activity can be determined by using 1% sodium phytate (obtainable from Sigma St. Louis, Missouri) as a substrate. The enzyme reaction is carried out at a pH of 5.5 and at a temperature of 40°C. Phytase releases phosphate groups from phytate. The determination of the released inorganic phosphorus is based on the colour formed by the reduction of a phosphomolybdate complex.

As well as facilitating the drying of the slurry, the co-presence of the organic solvent with the water has the advantage of substantially reducing the overall viscosity of the slurry. It has been found that in the absence of the organic solvent, water soluble proteins present in the food can cause the slurry to become so viscous that the necessary mechanical mixing is substantially prevented without the addition of a significant excess of water.

The present invention will now be explained in further detail by way of the following Example. This illustrates how the process of the invention can be incorporated into a typical process used to extract oil from rapeseed. It should be noted that this Example is not intended to restrict the scope of the present invention in any way.

### Example - Rapeseed processing

Rapeseed contains tiny oil bodies within its cells and is primarily commercially grown in order to yield this oil. Harvested rapeseed was cleaned, dried and pre-conditioned in the known way. The rapeseed was then flaked by rolling to break open the hulls. This was carried out by passing the rapeseed through the nip of a pair of smooth rollers turning at different speeds. The action of these rollers sheared the seeds into flakes whilst rupturing some of the oil cells.

The flakes were then subjected to thermal conditioning at about 80°C for about 1 hour which broke open the remaining oil cells. This step also helped to improve protein bio-availability in the resulting meal product. The conditioned flakes which contained about 42% by weight oil and about 8% by weight moisture were then fed to a series of low-pressure continuous screw presses where they received a moderate press. This stage extracted about one half of the available rapeseed oil from the rapeseed.

The cake resulting from the screw presses was then conveyed to a Rotocell solvent extractor where the canola oil was extracted with commercial n-hexane. The cake was introduced into the solvent extractor through a vapour-seal unit, where it was deposited into a basket. N-hexane was percolated by gravity through the cake bed so that it diffused into and saturated the cake fragments. The rapeseed oil migrated into the organic solvent and the oil-containing solvent then flowed out through the cake support screen at the bottom of the basket for separation.

The vapour pressure of n-hexane limits the practical operating temperature of the solvent extractor to about 55°C. A higher temperature unduly increases the quantity of solvent vapour which must be recovered. Furthermore, if the cake temperature is at or near the boiling point of the solvent, a vapour phase occurs at the interface between the cake fragments and the solvent which effectively blocks liquid diffusion. In this way, the extractor yielded an essentially liquid phase containing canola oil and n-hexane, and a "solid" phase of oil-extracted rapeseeds adulterated with n-hexane.

In conventional rapeseed processing, the n-hexane adulterated rapeseeds would be desolvented as the next step. However, in accordance with the process of the present invention, the rapeseeds were then subjected to the phytase treatment to convert phytate within the seeds into inorganic phosphate.

1 kg of the crushed oil-extracted rapeseeds containing 0.38 moles of total phosphate in the form of phytate adulterated with 0.3 litres of n-hexane was formed into a slurry with 750 Units of Natuphos® , a phytase obtained from BASF Germany, 1 litre of water and 1.1 litres of additional n-hexane. The amount of phytate present in the oil-extracted rapeseeds may be assayed according to the method of Tangkongchitr et al. described in Cereal Chem., 58, pp 226-228. The resulting slurry was then sealed in a plexiglass vessel maintained at 50°C by incubation in a water bath and continuously mixed for 1 hour using a dough hook mixing system. At the conclusion of the incubation period, the resulting meal (Sample 1) contained 0.17 moles of inorganic phosphate, equivalent to a conversion of 45% by mol. of the starting phytate. Several methods are known for assaying inorganic phosphate such as the method Pons and Guthrie (Ind. Eng. Chem. Anal. Ed. 18, pp 184-186). By way of comparison, an identical treatment was carried out on 1 kg of crushed rapeseeds except that the phytase was omitted. The resulting meal (Sample 2) contained only 0.019 moles of inorganic phosphate equivalent to a conversion rate of only 5% by mol. based on the starting phytate content of the oil-extracted rapeseeds.

A further 1 kg batch of crushed rapeseeds was treated according to Sample 1 above except that citric acid was added to the slurry as a chelating agent to give a final concentration of 0.5% by weight of citric acid in the slurry. The citric acid reduced the pH of the mixture to 5.0. This treatment resulted in a meal (Sample 3) containing 0.32 moles of inorganic phosphate equivalent to a conversion of 85% by mol. of the starting phytate. Sample 3 shows the benefits of combined treatment with both the organic solvent and the chelating agent. Similarly high values of phytate conversion can be achieved by using alternative chelating agents such as EDTA or phthalic acid.

The resulting inorganic phosphate-enriched meals of Samples 1 and 3 were then subjected to desolventizing-toasting. The desolventizing removes the n-hexane for recycling back to the oil extraction step by evaporation from the meal together with a proportion of the water. The resulting dried meal can then be used directly as a high-protein, high-inorganic phosphate supplement for an animal feed or for human food.

## Claims

1. A process for converting phytate in a food into inorganic phosphate comprising the steps of:
(i) mechanically mixing a slurry comprising:
(a) 100 parts by weight of the phytate-containing food,
(b) 60-1000 parts by weight of a solvent mixture which comprises water and a water-immiscible organic solvent having a boiling point of 20-100°C, the water-immiscible organic solvent constituting 20-85% by wt. of the solvent mixture, and
(c) a phytase; and
(ii) drying the food to remove the organic solvent.

2. A process according to Claim 1, wherein the water-immiscible organic solvent constitutes 40-75% by wt. of the solvent mixture.

3. A process according to Claim 1 or Claim 2, wherein the slurry further comprises a chelating agent for alkaline earth metal cations.

4. A process according to any preceding Claim, wherein the phytate-containing food for inclusion in the slurry is obtained by mixing crushed oilseeds with the water-immiscible organic solvent to extract oil from the oilseeds, and separating the crushed oilseeds adulterated with the solvent from the oil-containing solvent.

5. A process according to Claim 4, wherein 10-80% by weight of crushed oilseeds are mixed with 90-20% by weight of the organic solvent.

6. A process according to Claim 4 or Claim 5, wherein the solvent-adulterated crushed oilseeds comprise 15-65% by weight of the solvent and 85-35% by weight of the crushed oilseeds.

7. A process according to any of Claims 4-6, wherein the slurry is formed by mixing:
100 parts by weight (excluding co-present solvent) of crushed oilseeds adulterated with the solvent;
10-10,000 Units of phytase per kg of crushed oilseeds;
30-350 parts by weight of water; and
optionally additional organic solvent so that the total amount of organic solvent in the slurry is 30-850 parts by weight.

8. A process according to Claim 7, wherein the slurry further comprises 0.05-10 parts by weight of a chelating agent for alkaline earth metal cations.

9. A process according to Claim 3 or Claim 8, wherein the chelating agent is ascorbic acid, phthalic acid, citric acid or EDTA.

10. A process according to any of Claims 4-9, wherein the oilseeds are soybeans, sunflower seeds, rapeseeds, canola seeds, rice, rice bran, maize, cottonseeds, peanuts, safflower seeds, coconuts, palmnuts, walnuts or hazelnuts.

11. A process according to any preceding Claim, wherein the mixing step (i) is carried out in a mixer for 5 minutes-2 hours at a temperature of 10-70°C and at a pH of 2.0-8.0.

12. A process according to any preceding Claim, wherein the organic solvent is pentane, hexane or heptane.

13. A process according to any preceding Claim, wherein the slurry further comprises one or more of cereal grains, cereal flour, fats, vitamins, amino acids or one or more enzymes.

14. A process according to Claim 13, wherein the one or more enzymes are selected from a protease, a carboxypeptidase, a cellulase, a xylanase, a mannanase, an amylase, an α-galactosidase, a pectinase, a β-glucanase and an esterase.

15. A process for producing an animal feed or a human food comprising the steps of converting phytate in a food into inorganic phosphate according to any preceding Claim, and mixing the resulting inorganic phosphate-enriched food with one or more additional alimentary products.

## Patentansprüche

1. Verfahren für die Umwandlung von Inosithexaphosphat in einem Lebensmittel zu anorganischem Phosphat, umfassend die folgenden Schritte:
(i) mechanisches Mischen einer Aufschlämmung, umfassend:
(a) 100 Gew.-Teile eines inosithexaphosphathaltigen Lebensmittels,
(b) 60 bis 1.000 Gew.-Teile einer Lösungsmittelmischung, die Wasser und ein mit Wasser nicht mischbares organisches Lösungsmittel umfasst, mit einem Siedepunkt von 20 bis 100°C, wobei das mit Wasser nicht mischbare organische Lösungsmittel 20 bis 85 Gew.% der Lösungsmittelmischung bildet, und
(c) eine Phytase; und
(ii) Trocknen des Lebensmittels, um das organische Lösungsmittel zu entfernen.

2. Verfahren gemäss Anspruch 1, wobei das mit Wasser mischbare organische Lösungsmittel 40 bis 75 Gew.% der Lösungsmittelmischung bildet.

3. Verfahren gemäss Anspruch 1 oder 2, wobei die Aufschlämmung weiterhin einen Chelatbildner für Erdalkalimetallkationen umfasst.

4. Verfahren gemäss einem der vorstehenden Ansprüche, wobei das innosithexaphosphathaltige Lebensmittel zum Einschluss in die Aufschlämmung erhalten wird durch Vermischung von zerkleinerten Ölsaat mit dem nichtmischbaren organischen Lösungsmittel, um Öl aus der Ölsaat zu extrahieren, und Abtrennung der zerkleinerten Ölsaat, versetzt mit dem Lösungsmittel aus dem ölhaltigen Lösungsmittel.

5. Verfahren gemäss Anspruch 4, wobei 10 bis 80 Gew.% der zerkleinerten Ölsaat mit 90 bis 20 Gew.% des organischen Lösungsmittels vermischt werden.

6. Verfahren gemäss Anspruch 4 oder Anspruch 5, wobei die mit Lösungsmittel versetzte, zerkleinerte Ölsaat 15 bis 65 Gew.% des Lösungsmittels und 85 bis 35 Gew.% der zerkleinerten Ölsaat umfasst.

7. Verfahren gemäss einem der Ansprüche 4 bis 6, wobei die Aufschlämmung gebildet wird durch Vermischen von:
100 Gew.-Teilen (ausschliesslich mitvorliegendem Lösungsmittel) von zerkleinerter Ölsaat, versetzt mit dem Lösungsmittel;
10 bis 10.000 Einheiten Phytase pro kg zerkleinerter Ölsaat;
30 bis 350 Gew.-Teilen Wasser und
gegebenenfalls zusätzlichem organischen Lösungsmittel, so dass die Gesamtmenge des organischen Lösungsmittels in der Aufschlämmung 30 bis 850 Gew.-Teile beträgt.

8. Verfahren gemäss Anspruch 7, wobei die Aufschlämmung weiterhin 0,05 bis 10 Gew.-Teile eines Chelatbildners für Erdalkalimetallkationen umfasst.

9. Verfahren gemäss Anspruch 3 oder 8, wobei der Chelatbildner Ascorbinsäure, Phthalsäure, Zitronensäure oder EDTA ist.

10. Verfahren gemäss einem der Ansprüche 4 bis 9, wobei die Ölsaat Sojabohnen, Sonnenblumensamen, Rapssamen, Canolasamen, Reis, Reiskleie, Mais, Baumwollsamen, Erdnüsse, Safflowersamen, Kokosnuss, Palmkerne, Walnüsse oder Haselnüsse ist.

11. Verfahren gemäss einem der vorstehenden Ansprüche, wobei der Mischschritt (i) in einem Mischer für 5 Minuten bis 2 Stunden bei einer Temperatur von 10 bis 70°C und einem pH von 2,0 bis 8,0 durchgeführt wird.

12. Verfahren gemäss einem der vorstehenden Ansprüche, wobei das organische Lösungsmittel Pentan, Hexan oder Heptan ist.

13. Verfahren gemäss einem der vorstehenden Ansprüche, wobei die Aufschlämmung weiterhin ein oder mehr Getreidekörner, Getreidemehl, Fette, Vitamine, Aminosäuren oder ein oder mehrere Enzyme umfasst.

14. Verfahren gemäss Anspruch 13, wobei die ein oder mehreren Enzyme ausgewählt sind aus einer Protease, einer Carboxypeptidase, einer Cellulase, einer Xylanase, einer β-D- Mannoxidase, einer Amylase, einer α-Galactosidase, einer Pectinase, einer β-Glucanase und einer Esterase.

15. Verfahren zur Erzeugung eines Tierfutters oder eines menschlichen Lebensmittels, umfassend die Schritte der Umwandlung von Innosithexaphosphat in einem Lebensmittel zu anorganischem Phosphat gemäss einem der vorstehenden Ansprüche, und Vermischen des resultierenden anorganischen Phosphat-angereicherten Lebensmittels mit einem oder mehreren zusätzlichen Nahrungsmittelprodukten.

## Revendications

1. Procédé pour la transformation d'un phytate dans un aliment en un phosphate inorganique comprenant les étapes consistant à :
(i) mélanger de façon mécanique une bouillie comprenant
a) 100 parties en poids de l'aliment contenant un phytate
b) 60 à 1000 parties en poids d'un mélange de solvants qui comprend de l'eau et un solvant organique immiscible à l'eau ayant un point d'ébullition de 20 à 100°C, le solvant organique immiscible à l'eau constituant 20 à 85 % en poids du mélange de solvants, et
c) une phytase ; et
(ii) sécher l'aliment pour enlever le solvant organique.

2. Procédé selon la revendication 1, dans lequel le solvant organique immiscible à l'eau constitue 40 à 75 % en poids du mélange de solvants.

3. Procédé selon la revendication 1 ou la revendication 2, dans lequel la bouillie comprend en outre un agent de chélation pour des cations de métaux alcalino-terreux.

4. Procédé selon l'une quelconque des revendications précédentes, dans lequel l'aliment contenant un phytate à inclure dans la bouillie est obtenu en mélangeant des graines oléagineuses concassées avec le solvant organique immiscible à l'eau pour extraire l'huile des graines oléagineuses, et en séparant les graines oléagineuses concassées adultérées avec le solvant du solvant contenant l'huile.

5. Procédé selon la revendication 4, dans lequel 10 à 80 % en poids de graines oléagineuses concassées sont mélangées avec 90 à 20 % en poids du solvant organique.

6. Procédé selon la revendication 4 ou la revendication 5, dans lequel les graines oléagineuses concassées adultérées avec le solvant comprennent 15 à 65 % en poids du solvant et 85 à 35 % en poids des graines oléagineuses concassées.

7. Procédé selon l'une quelconque des revendications 4 à 6, dans lequel la bouillie est formée en mélangeant :
100 parties en poids (excluant le solvant co-présent) de graines oléagineuses concassées adultérées avec le solvant ;
10 à 10 000 unités de phytase par kg de graines oléagineuses concassées ;
30 à 350 parts en poids d'eau ; et
éventuellement un solvant organique additionnel de manière à ce que la quantité totale de solvant organique dans la bouillie soit de 30 à 850 parties en poids.

8. Procédé selon la revendication 7, dans lequel la bouillie comprend en outre 0,05 à 10 parties en poids d'un agent de chélation pour des cations de métaux alcalino-terreux.

9. Procédé selon la revendication 3 ou la revendication 8, dans lequel l'agent de chélation est l'acide ascorbique, l'acide phtalique, l'acide citrique ou l'acide éthylène diamine tétraacétique (EDTA).

10. Procédé selon l'une quelconque des revendications 4 à 9, dans lequel les graines oléagineuses sont des graines de soja, des graines de tournesol, des graines de colza, des graines de canola, du riz, du son de riz, du maïs, des graines de coton, des arachides, des graines de carthame, des noix de coco, des noix de palme, des noix ou des noisettes.

11. Procédé selon l'une quelconque des revendications précédentes, dans lequel l'étape de mélange (i) est réalisée dans un mélangeur pendant 5 minutes à 2 heures à une température de 10 à 70°C et à un pH de 2,0 à 8,0.

12. Procédé selon l'une quelconque des revendications précédentes, dans lequel le solvant organique est le pentane, l'hexane ou l'heptane.

13. Procédé selon l'une quelconque des revendications précédentes, dans lequel la bouillie comprend en outre l'un ou plusieurs parmi des grains de céréales, une farine de céréale, des matières grasses, des vitamines, des acides aminés ou un ou plusieurs enzymes.

14. Procédé selon la revendication 13, dans lequel l'un ou les plusieurs enzymes sont choisis parmi une protéase, une carboxypeptidase, une cellulase, une xylanase, une mannanase, une amylase, une α-galactosidase, une pectinase, une β-glucanase et une estérase.

15. Procédé pour produire un aliment pour animaux ou un aliment pour humains qui comprend les étapes de transformation d'un phytate dans un aliment en un phosphate inorganique selon l'une quelconque des revendications précédentes, et de mélange de l'aliment enrichi en phosphate inorganique résultant avec un ou plusieurs produits alimentaires supplémentaires.
